# EUROPÄISCHE PATENTSCHRIFT

(11) **EP 1 406 799 B1**
(45) Veröffentlichungstag und Bekanntmachung des Hinweises auf die Patenterteilung: **07.01.2009**
(21) Anmeldenummer: 02751124.5
(22) Anmeldetag: 09.07.2002
(51) Int. Cl.: B60T 8/00

(54) **FAHRZEUGBREMSSYSTEM**
VEHICLE BRAKING SYSTEM
SYSTEME DE FREINAGE D'UN VEHICULE AUTOMOBILE

(30) Priorität: 13.07.2001 DE 10133409
(43) Veröffentlichungstag der Anmeldung: 14.04.2004
(73) Patentinhaber: Lucas Automotive GmbH, 56070 Koblenz (DE)
(72) Erfinder: EINIG, Frank, 56727 Mayen (DE); KNECHTGES, Josef, 56727 Mayen (DE)
(74) Vertreter: Schmidt, Steffen J.
(86) Internationale Anmeldenummer: PCT/EP2002/007656
(87) Internationale Veröffentlichungsnummer: WO 2003/006293

(56) Entgegenhaltungen:
- WO-A-99/30941
- WO-A-99/30942
- US-B1- 6 178 368

## Beschreibung

Die Erfindung betrifft ein Fahrzeugbremssystem, das Regeleinrichtungen umfasst, die das querdynamische Verhalten des Fahrzeugs ermitteln, um durch vom Fahrer unabhängiges Einstellen des Bremsmomentes an einzelnen Fahrzeugrädern ein stabiles Fahrzeugverhalten aufrechtzuerhalten bzw. wiederherzustellen.

Aus dem Dokument WO-A-99/30 942 ist ein Fahrzeugbremssystem bekannt, das Messeinrichtungen umfasst, die das querdynamische Verhalten des Fahrzeugs ermitteln. Damit kann in kritischen Situationen zumindest an einem kurvenäußeren Vorderrad unabhängig vom Fahrer ein Bremsmoment erzeugt bzw. ein bereits eingestelltes Bremsmoment erhöht werden, wodurch ein stabiles Fahrzeugverhalten aufrechterhalten bzw. wiederhergestellt werden kann. Nachteilig ist, dass aufgrund des an dem kurvenäußeren Vorderrad erzeugten bzw. erhöhten Bremsmomentes ein Untersteuern des Fahrzeugs hervorgerufen werden kann. Dies kann wiederum die Fahrstabilität beeinträchtigen.

In bekannter Weise sind heutige Fahrzeugbremssysteme über das Antiblockiersystem (ABS), das ein Blockieren der Räder beim Bremsen verhindert, hinaus mit Regeleinrichtungen ausgestattet, die durch vom Fahrer unabhängiges Abbremsen einzelner Räder die Fahrstabilität aktiv wiederherstellen. So vermeidet die Antriebsschlupfregelung (ASR) das Durchdrehen der Räder beim Antreiben. Darüber hinaus erhöht die Fahrdynamikregelung (FDR) die Fahrsicherheit ganz wesentlich, da der Fahrer in querdynamisch kritischen Situationen aktiv unterstützt wird, in dem beim Untersteuern das kurveninnere Hinterrad und beim Übersteuern das kurvenäußere Vorderrad abgebremst wird. Um dazu das querdynamische Verhalten des Fahrzeugs zu ermitteln, werden beispielsweise der vom Fahrer vorgegebene Lenkwinkel, die Fahrzeugquerbeschleunigung sowie das Gierverhalten des Fahrzeugs um seine Hochachse erfasst.

Ein Problem stellt die Kippstabilität dar, d. h. die Gefahr des seitlichen Kippens des Fahrzeugs bei Kurvenfahrt. Diese Gefahr wächst mit zunehmender Fahrzeuggesamthöhe und tritt insbesondere auf Fahrbahnobefiächen mit hohem Reibwert auf. Weil das Fahrzeug dann die Kippgrenze vor der Rutschgrenze erreicht, können die Antriebsschlupfregelung und die Fahrdyriamikregelung erst gar nicht eingreifen, so dass ein sicherheitskritischer Fahrzustand besteht.

Von daher hat sich die Erfindung zur Aufgabe gemacht, die Leistungsfähigkeit eines vorgenannten Fahrzeugbremssystems für den Fall auszugestalten, dass ein seitliches Kippen des Fahrzeugs bei Kurvenfahrt zu verhindern ist.

Zur Lösung der Aufgabe wird vorgeschlagen, dass an dem kurvenäußeren Vorderrad ein Bremsmoment erzeugt bzw. ein bereits eingestelltes Bremsmoment erhöht wird, wobei eine über- oder untergeordnete Fahrdynamikregelung eingreift, wenn aufgrund des an dem kurvenäußeren Vorderrad erzeugten bzw. erhöhten Bremsmomentes ein Untersteuern des Fahrzeugs zu verhindern ist.

Der große Vorteil der Erfindung besteht darin, dass aufgrund des an dem kurvenäußeren Vorderrad erzeugten bzw. erhöhten Bremsmomentes ein "leichtes" Untersteuern des Fahrzeugs bewusst hervorgerufen wird, da an dem kurvenäußeren Vorderrad die Seitenführungskraft reduziert wird, so dass einem seitlichen Kippen des Fahrzeugs zuverlässig entgegengewirkt wird. Durch das Wiederherstellen der Kippstabilität ergibt sich bei dem erfindungsgemäßen Fahrzeugbremssystem ein bedeutender Sicherheitsvorteil.

Auch besteht kein Risiko, dass aufgrund des bewusst hervorgerufenen "leichten" Untersteuerns des Fahrzeugs ein querdynamisch kritischer Fahrzustand eintritt, da die je nach Auslegung des Fahrzeugbremssystems über- oder untergeordnete Fahrdynamikregelung eingreifen kann, wenn aufgrund des an dem kurvenäußeren Vorderrad erzeugten bzw. erhöhten Bremsmomentes ein "kritisches" Untersteuern des Fahrzeugs zu verhindern ist.

Wie das Bremsmoment an dem kurvenäußeren Vorderrad sowohl größenordnungsmäßig als auch verlaufsmäßig (z. B. sprungförmig oder rampenförmig) erzeugt bzw. erhöht wird, um in geeigneter Weise ein unkritisches Untersteuern des Fahrzeugs zu erzwingen, wird unter anderem bestimmt aus dem Lenkwinkel, der Fahrzeugquerbeschleunigung sowie dem Gierverhalten (Giergeschwindigkeit) des Fahrzeugs um seine Hochachse, wobei auch stationäre Fahrzeugparameter, wie besispielsweise Spurweite und Achsabstand berücksichtigt werden.

Da die Kippgrenze des Fahrzeugs ganz wesentlich von der Fahrzeugquerbeschleunigung abhängig ist, wird das Bremsmoment an dem kurvenäusseren Vorderrad erzeugt bzw. erhöht, wenn die Fahrzeugquerbeschleunigung bzw. eine mit der Fahrzeugquerbeschleunigung in Beziehung stehende Grösse einen vorherbestimmten Grenzwert überschreitet. Dabei wird als vorherbestimmter Grenzwert eine maximal zulässige Fahrzeugquerbeschleunigung angesetzt, bei der das Fahrzeug bei Kurvenfahrt noch nicht zum seitlichen Kippen neigt. Als mit der Fahrzeugquerbeschleunigung in Beziehung stehende Grösse kann beispielsweise der Wankwinkel des Fahrzeugs herangezogen werden, sofern auf diesen in dem Fahrzeugbremssystem mess- oder rechentechnisch Zugriff besteht.

Vorzugsweise wird der Grenzwert für die maximal zulässige Fahrzeugquerbeschleunigung in Abhängigkeit vom Beladungszustand des Fahrzeugs vorherbestimmt, sofern dieser dem Fahrzeugbremssystem mess- oder rechentechnisch zur Verfügung steht. Denn insbesondere bei leichten Nutzfahrzeugen, wie Kleintranportern, die einen verhältnismässig hohen Fahrzeugschwerpunkt haben, hängt die Kippgrenze sehr stark vom Beladungszustand ab, insbesondere wenn sich durch Aufbringen von Durchlasten die Fahrzeugschwerpunktshöhe verlagert. Auch vergrössert sich mit zunehmender Beladung der Wankwinkel, da die Fahrzeugmasse und dadurch die wirkende Zentrifugalkraft zunimmt. Deshalb wird der Grenzwert für die maximal zulässige Fahrzeugquerbeschleunigung mit zunehmender Beladung verringert.

Der Grenzwert für die maximal zulässige Fahrzeugquerbeschleunigung wird zu Beginn eines jeden Fahrbetriebes auf einen Minimalwert zurückgesetzt. Dabei wird der Beginn eines Fahrbetriebes jedesmal anhand des Einschaltens der Zündung durch den Fahrer festgestellt. Für den Minimalwert, mit dem sich ein seitliches Kippen auch in Extremsituationen noch vermeiden lässt, hat sich in der Praxis eine Fahrzeugquerbeschleunigung in der Grössenordnung von drei Metern pro Sekundequadrat als sicher erwiesen.

Um die Ansprechempfindlichkeit der tatsächlichen Kippgrenze im aktuellen Fahrbetrieb anzupassen, wird der Grenzwert für die maximal zulässige Fahrzeugquerbeschleunigung während eines ununterbrochenen Fahrbetriebes, also wenn kein Ein- bzw. Ausschalten der Zündung durch den Fahrer festgestellt wird, erhöht, solange die kurveninneren Räder nicht abheben, also noch Kontakt zur Fahrbahnoberfläche haben. Zum Überprüfen des Abhebens der kurveninneren Räder wird der Schlupf an den kurveninneren Rädern ermittelt und anschliessend überprüft, ob der Schlupf betragsmässig einen vorherbestimmten Wert unterschreitet bzw. nicht überschreitet. Als praxisgerecht hat sich ein vorherbestimmter Schlupfwert in der Grössenordnung von zehn Prozent erwiesen.

Gleichfalls wird als Bedingung für das Erzeugen bzw. Erhöhen des Bremsmomentes an dem kurvenäusseren Vorderrad das Abheben der kurveninneren Räder herangezogen, also wenn der Schlupf an den kurveninneren Rädern betragsmässig einen vorherbestimmten Wert überschreitet bzw. nicht unterschreitet.

Dabei wird ein angetriebenes kurveninneres Rad dahingehend überprüft, ob ein vorherbestimmter positiver Schlupfwert überschritten bzw. nicht unterschritten wird.

Bei einem nichtangetriebenen kurveninneren Rad wird ein Bremsmoment erzeugt bzw. ein bereits eingestelltes Bremsmoment erhöht, um das nichtangetriebene kurveninnere Rad dahingehend zu überprüfen, ob ein vorherbestimmter negativer Schlupfwert unterschritten bzw. nicht überschritten wird.

An einem angetriebenen kurveninneren Rad wird zum Überprüfen wie bei einem nichtangetriebenen kurveninneren Rad ein Bremsmoment erzeugt bzw. erhöht, wenn der Antriebsstrang des Fahrzeugs nicht geschlossen ist, also kein Kraftschluss über Kupplung und Getriebe besteht.

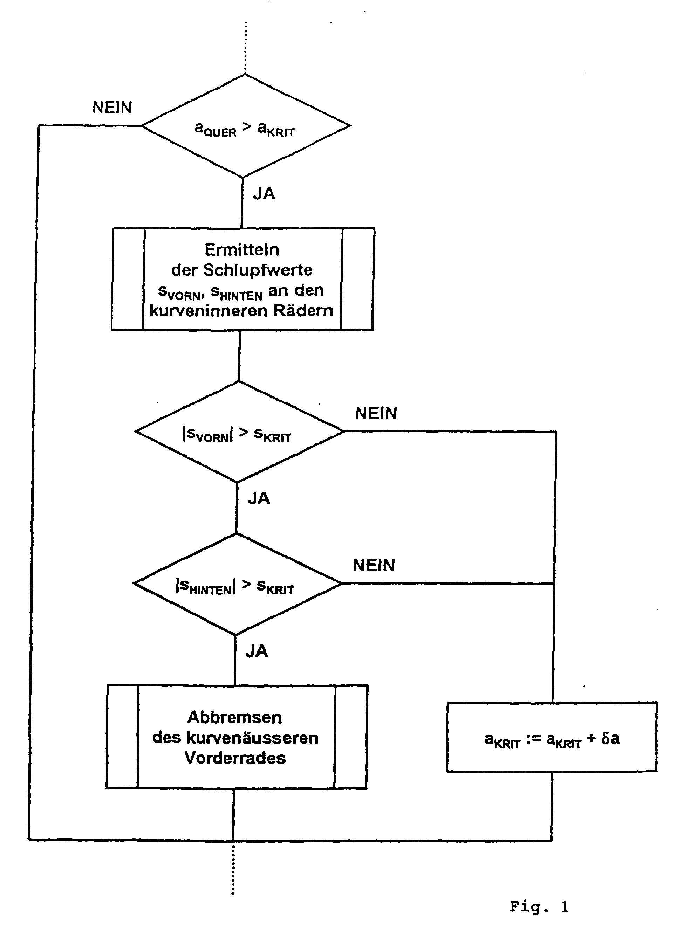

Nachfolgend wird die Erfindung anhand eines Ausführungsbeispiels näher erläutert. Dazu zeigt die einzige Zeichnung ein Flussdiagramm, das zyklisch durchlaufen wird. Dabei wird zunächst überprüft, ob die aktuelle Fahrzeugquerbeschleunigung a_{QUER} eine vorherbestimmte Grenzbeschleunigung a_{KRIT} überschreitet. Ist dies nicht der Fall, so wird der aktuelle Durchlauf abgebrochen und im folgenden Zyklus der nächste Durchlauf begonnen.

Überschreitet die aktuelle Fahrzeugquerbeschleunigung a_{QUER} den vorherbestimmten Grenzwert a_{KRIT}, so werden die Schlupfwerte s_{VORN}, s_{HINTEN} an den kurveninneren Rädern ermittelt. Danach werden die Beträge bzw. Absolutwerte der Schlupfwerte |s_{VORN}|, |s_{HINTEN}| dahingehend überprüft, ob der Schlupf an beiden kurveninneren Rädern einen vorherbestimmten Grenzschlupf s_{KRIT} überschreitet. Ist dies nicht der Fall, so wird die Grenzbeschleunigung a_{KRIT} um einen bestimmten Betrag δa erhöht.

Nur dann, wenn der Schlupf an beiden kurveninneren Rädern einen vorherbestimmten Grenzschlupf s_{KRIT} überschreitet, wird das kurvenäussere Vorderrad abgebremst, um ein seitliches Kippen des Fahrzeugs zu verhindern.

Im Ausführungsbeispiel wird die Grenzbeschleunigung a_{KRIT} schrittweise um den vorherbestimmten Wert δa erhöht. Es versteht sich aber für einen Fachmann, dass eine Erhöhung der Grenzbeschleunigung a_{KRIT} alternativ aber auch gemäss einer linearen, progressiven oder degressiven Funktion erfolgen kann. Entscheidend ist, das durch das Erhöhen der Grenzbeschleunigung a_{KRIT} die Ansprechempfindlichkeit angepasst wird, so dass keine "unnötigen" Bremseingriffe erfolgen, sowohl um den Schlupf an den kurveninneren Rädern zu ermitteln, als auch das kurvenäussere Vorderrad abzubremsen. Dadurch wird der Fahrkomfort aufrechterhalten.

## Patentansprüche

1. Fahrzeugbremssystem, das Regeleinrichtungen umfasst, die das querdynamische Verhalten des Fahrzeugs ermitteln, um durch vom Fahrer unabhängiges Einstellen des Bremsmomentes an einzelnen Fahrzeugrädern ein stabiles Fahrzeugverhalten aufrechtzuerhalten bzw. wiederherzustellen, wobei zum Verhindern eines seitlichen Kippens des Fahrzeugs bei Kurvenfahrt an dem kurvenäusseren Vorderrad ein Bremsmoment erzeugt bzw. ein bereits eingestelltes Bremsmoment erhöht wird, **dadurch gekennzeichnet, dass** eine über- oder untergeordnete Fahrdynamikregelung eingreift, wenn aufgrund des an dem kurvenäusseren Vorderrad erzeugten bzw. erhöhten Bremsmomentes ein Untersteuern des Fahrzeugs zu verhindern ist.

2. Fahtzeugbremssystem nach Anspruch 1, **dadurch gekennzeichnet, dass** das Bremsmoment an dem kurvenäusseren Vorderrad erzeugt bzw. erhöht wird, wenn die Fahrzeugquerbeschleunigung bzw. eine mit der Fahrzeugquerbeschleunigung in Beziehung stehende Größe einen vorherbestimmten Grenzwert (a_{KRIT}) überschreitet.

3. Fahrzeugbremssystem nach Anspruch 2, **dadurch gekennzeichnet, dass** der Grenzwert (a_{KRIT}) in Abhängigkeit vom Beladungszustand des Fahrzeugs vorherbestimmt wird.

4. Fahrzeugbremssystem nach Anspruch 2 oder 3, **dadurch gekennzeichnet, dass** der Grenzwert (a_{KRIT}) zu Beginn eines jeden Fahrbetriebes auf einen Minimalwert (a_{MIN}) zurückgesetzt wird.

5. Fahrzeugbremssystem nach einem der Ansprüche 2 bis 4, **dadurch gekennzeichnet, dass** der Grenzwert (a_{KRIT}) während eines Fahrbetriebes erhöht wird, solange der Schlupf (s_{VORN}, S_{HINTEN}) an den kurveninneren Rädern betragsmässig einen vorherbestimmten Wert (s_{KRIT}) unterschreitet bzw. nicht überschreitet.

6. Fahrzeugbremssystem nach einem der Ansprüche 1 bis 5, **dadurch gekennzeichnet, dass** das Bremsmoment an dem kurvenäusseren Vorderrad dann erzeugt bzw. erhöht wird, wenn der Schlupf (s_{VORN}, s_{HINTEN}) an den kurveninneren Rädern betragsmässig einen vorherbestimmten Wert (s_{KRIT}) überschreitet bzw. nicht unterschreitet.

7. Fahrzeugbremssystem nach Anspruch 6, **dadurch gekennzeichnet, dass** ein angetriebenes kurveninneres Rad dahingehend überprüft wird, ob ein vorherbestimmter positiver Schlupfwert (+s_{KRIT}) überschritten bzw. nicht unterschritten wird.

8. Fahrzeugbremssystem nach Anspruch 6 oder 7, **dadurch gekennzeichnet, dass** an einem nichtangetriebenen kurveninneren Rad ein Bremsmoment erzeugt bzw. ein bereits eingestelltes Bremsmoment erhöht wird, um das nichtangetriebene kurveninnere Rad dahingehend zu überprüfen, ob ein vorherbestimmter negativer Schlupfwert (-s_{KRIT}) unterschritten bzw. nicht überschritten wird.

## Claims

1. Vehicle braking system comprising regulating devices, which determine the transversely dynamic behaviour of the vehicle, in order to maintain or restore stable vehicle behaviour by setting the braking torque, independently of the driver, on individual vehicle wheels, wherein to prevent the vehicle from overturning laterally when negotiating curves, a braking torque is generated on the front wheel on the outside of the curve, or a braking torque that has already been set is increased,
**characterized in that** higher-level or lower-level driving dynamic regulation intervenes if because of the braking torque which has been generated or increased on the front wheel on the outside of the curve, under-steering of the vehicle has to be prevented.

2. Vehicle braking system according to claim 1,
**characterized in that** the braking torque of the front wheel on the outside of the curve is generated or increased when the vehicle transverse acceleration, or a magnitude which is related to the vehicle transverse acceleration, exceeds a predefined limit (a_{CRIT}).

3. Vehicle braking system according to claim 2,
**characterized in that** the limit (a_{CRIT}) is predefined depending on the loading state of the vehicle.

4. Vehicle braking system according to claim 2 or 3,
**characterized in that** the limit (a_{CRIT}) is reset to a minimum value (a_{MIN}) at the start of each driving operation.

5. Vehicle braking system according to one of the claims 2 to 4,
**characterized in that** the limit (a_{CRIT}) is increased during driving operation, as long as the amount of the slip (s_{FRONT}, s_{REAR}) on the wheels on the inside of the curve is below, or not above, predefined value (s_{CRIT}).

6. Vehicle braking system according to one of the claims 1 to 5,
**characterized in that** the braking torque on the front wheel on the outside of the curve is generated or increased when the amount of the slip (s_{FRONT}, s_{REAR}) on the wheels on the inside of the curve is above, or not below, a predefined value (s_{CRIT}).

7. Vehicle braking system according to claim 6,
**characterized in that** a driven wheel on the inside of the curve is tested for whether it is above, or not below, a predefined positive slip value (+ s_{CRIT}).

8. Vehicle braking system according to claim 6 or 7,
**characterized in that** on a non-driven wheel on the inside of the curve, a braking torque is generated, or a previously set braking torque is increased, to test the non-driven wheel on the inside of the curve for whether it is below, or not above, a predefined negative slip value (-s_{CRIT}).

## Revendications

1. Système de freinage d'un véhicule automobile, comprenant des dispositifs de réglage qui déterminent le comportement dynamique transversal du véhicule pour conserver ou restaurer un comportement stable du véhicule par réglage du couple de freinage sur les différentes roues indépendamment du conducteur, un couple de freinage étant produit sur la roue avant côté extérieur du virage, ou un couple de freinage déjà réglé étant augmenté, pour empêcher le basculement latéral du véhicule dans le virage, **caractérisé en ce qu'**un réglage dynamique de marche hiérarchiquement supérieur ou inférieur intervient lorsqu'il s'agit d'empêcher le sous-virage du véhicule en raison du couple de freinage augmenté ou produit sur la roue avant côté extérieur du virage.

2. Système de freinage d'un véhicule automobile selon la revendication 1, **caractérisé en ce que** le couple de freinage est augmenté ou produit sur la roue avant côté extérieur du virage lorsque l'accélération transversale du véhicule ou une grandeur en relation avec l'accélération transversale du véhicule dépasse une valeur limite prédéterminée (a_{KRIT}).

3. Système de freinage d'un véhicule automobile selon la revendication 2, **caractérisé en ce que** la valeur limite (a_{KRIT}) est prédéterminée en fonction de l'état de chargement du véhicule.

4. Système de freinage d'un véhicule automobile selon la revendication 2 ou 3, **caractérisé en ce que** la valeur limite (a_{KRIT}) est réinitialisée à une valeur minimale (a_{MIN}) au début de chaque mise en marche du véhicule.

5. Système de freinage d'un véhicule automobile selon l'une des revendications 2 à 4, **caractérisé en ce que** la valeur limite (a_{KRIT}) est augmentée pendant la marche du véhicule tant que la valeur de patinage (S_{VORN}, S_{HINTEN}) aux roues côté intérieur du virage sous-dépasse ou ne dépasse pas une valeur prédéterminée (s_{KRIT}).

6. Système de freinage d'un véhicule automobile selon l'une des revendications 1 à 5, **caractérisé en ce que** le couple de freinage est augmenté ou produit sur la roue avant côté extérieur du virage dès lors que la valeur de patinage (S_{VORN}, S_{HINTEN}) aux roues côté intérieur du virage dépasse ou ne sous-dépasse pas une valeur prédéterminée (SKRIT).

7. Système de freinage d'un véhicule automobile selon la revendication 6, **caractérisé en ce qu'**une roue entraînée située côté intérieur du virage est contrôlée afin de vérifier si une valeur de patinage positive prédéterminée (+s_{KRIT}) est dépassée ou n'est pas sous-dépassée.

8. Système de freinage d'un véhicule automobile selon la revendication 6 ou 7, **caractérisé en ce qu'**un couple de freinage est produit sur une roue non entraînée située côté intérieur du virage, ou un couple de freinage déjà réglé est augmenté pour contrôler la roue non entraînée située côté intérieur du virage afin de vérifier si une valeur de patinage négative prédéterminée (-s_{KRIT}) est sous-dépassée ou n'est pas dépassée.
